# EUROPÄISCHE PATENTANMELDUNG

(11) **EP 2 923 834 A1**
(43) Veröffentlichungstag der Anmeldung: **30.09.2015**
(21) Anmeldenummer: 15160424.6
(22) Anmeldetag: 23.03.2015
(51) Int. Cl.: B32B 27/08, B32B 27/32, B65D 21/02

(54) **VERPACKUNGSMATERIAL UND VERPACKUNG**

(30) Priorität: 24.03.2014 DE 102014103961
(71) Anmelder: Coveris Rigid (Zell) Deutschland GmbH, 56856 Zell (Mosel) (DE)
(72) Erfinder:
(74) Vertreter: Hutzelmann, Gerhard

(57) **Zusammenfassung**

Verpackungsmaterial zur Herstellung von tiefgezogenen Kunststoff-Verpackungen, insbesondere von Multipack-Verpackungen, wobei das Material brechbar ausgebildet ist und daraus hergestellte Verpackung.

## Beschreibung

Die Erfindung bezieht sich auf ein Verpackungsmaterial zur Herstellung von tiefgezogenen Kunststoff-Verpackungen, insbesondere von Multipack-Verpackungen, sowie auf ein Verfahren zur Herstellung einer Verpackung aus diesem Material und eine Multipack-Verpackung.

Es sind verschiedenste derartige Verpackungsmaterialien bekannt, die zur Herstellung von Multipack-Verpackungen geeignet sind.

Solche Verpackungen sind in der Regel aus Polystyrol (PS) hergestellt und müssen, damit diese voneinander trennbar werden, mit Stanzungen und tiefen Ritzungen versehen werden.

Aufgabe der Erfindung, ist es ein leicht trennbares Material für Multipacks vorzuschlagen.

Diese Aufgabe wird erfindungsgemäß dadurch gelöst, daß das Material brechbar ausgebildet ist.

Damit können die einzelnen Verpackungen des Multipacks leicht voneinander getrennt werden.

Dabei hat es sich als sehr vorteilhaft erwiesen, wenn das Material wenigstens großteils auf Polypropylen, Bio-PP oder PP bzw. Bio-PP enthaltenden Kunststoffen basiert.

Hierdurch kann teures, schwer entsorgbares PS vermieden werden. PP und insbesondere Bio-PP ist demgegenüber günstig, leicht und umweltschonend verarbeitbar und notfalls sogar kompostierbar.

Äußerst vorteilhaft ist es erfindungsgemäß, wenn das Material mehrlagig ausgebildet ist, wobei wenigstens eine Schicht aus dem erfindungsgemäßen, brechbaren Material besteht.

Hiermit lassen sich die Brucheigenschaften mit weiteren Eigenschaften kombinieren.

Dabei ist es sehr vorteilhaft, wenn das Material mindestens dreilagig ausgebildet ist.

Durch eine mindestens dreilagige Ausgestaltung lassen sich die erwünschten Eigenschaften sehr gut einstellen.

Äußerst vorteilhaft ist es erfindungsgemäß auch, wenn wenigstens einer Materiallage Füllstoffe, insbesondere mineralische Füllstoffe zugesetzt sind.

Ebenfalls sehr vorteilhaft ist es erfindungsgemäß, wenn wenigstens eine Materiallage geschäumt ausgeführt ist.

Durch die geschäumte Materiallage wird einerseits Material eingespart. Sowohl durch die geschäumte Materiallage als auch die mit Füllstoffen versehene Materiallage wird die Stabilität des Verbundes beeinflusst und so die Brechbarkeit gesteuert.

Dabei hat es sich als sehr vorteilhaft erwiesen, wenn die geschäumte Materiallage mit Stickstoff, Kohlenstoffdioxyd, Wasserdampf oder anderen Standard-Gasen physikalisch geschäumt worden ist.

Hierdurch werden sehr gute Schäumungsergebnisse erzielt.

Ebenfalls sehr vorteilhaft ist es erfindungsgemäß, wenn die geschäumte Materiallage chemisch geschäumt worden ist.

Dadurch werden besonders gleichmäßige und in der Regel feinporige Schäuunnmgsergebnisse erreicht.

Erfindungsgemäß hat es sich als besonders vorteilhaft erwiesen, wenn die Dichte des geschäumten Materials zwischen 0,50 und 0,90, insbesondere zwischen 0,65 und 0,90 g/cm³ beträgt. In der geschäumten Materiallage können auch Füllstoffe vorgesehen sein, die auch zur besseren Schäumbarkeit genutzt werden können.

Eine weitere erfindungsgemäß sehr vorteilhafte Ausgestaltung der Erfindung liegt auch vor, wenn die geschäumte Lage als Innenlage des Verpackungsmaterials vorgesehen ist.

Gemäß einer weiteren Ausgestaltung der Erfindung hat es sich als besonders vorteilhaft erwiesen, wenn wenigstens eine Außenlage mit Füllstoffen versehen ist, vorzugsweise ist beidseitig der Mittellage mindestens jeweils eine Lage mit Füllstoffen versehen.

Bei einer solchen Abfolge der Lagen hat sich ein besonders gutes Bruchverhalten ergeben. Das bedeutet, daß der Aufbau nicht von alleine und ungewollt bricht, jedoch gewollt leicht brechbar ist.

Eine weitere sehr vorteilhafte Ausgestaltung der Erfindung liegt auch dann vor, wenn wenigstens eine Materiallage einen Anteil eines Regrinds des Verpackungsmaterials enthält, wobei dieses vorzugsweise in der gefüllten Materiallage oder einer Zwischenlage vorgesehen ist.

Hierdurch werden Abfälle bei der Herstellung des Verpackungsmaterials und auch beim Herstellen von Verpackungen aus diesem Verpackungsmaterial nutzbar für die weitere Herstellung. Gerade beim Ausstanzen von Verpackungsabschnitten anfallende Überstände lassen sich so sehr gut wiederverwerten.

Äußerst vorteilhaft ist es erfindungsgemäß auch, wenn auf wenigstens einer gefüllten Lage eine Decklage als Skinlayer vorgesehen ist, wobei jeder Skinlayer eine Dicke von 2 bis 10%, vorzugsweise von 2 bis 5% der Dicke des Gesamtmaterials aufweisen kann.

Hierdurch wird das Füllmaterial der gefüllten Lage abgedeckt. Gerade bei Verwendung des Verpackungsmaterials für Lebensmittelverpackungen ist dies wichtig, um einen direkten Kontakt zwischen Füllmaterial und Füllgut der Verpackung zu verhindern. Ebenso lassen sich so glatte und damit zum Beispiel sehr gut bedruckbare Oberflächen erzeugen. Der Skinlayer kann dabei integraler Bestandteil der gefüllten Lage oder aber zusätzlich auf dieser aufgebracht sein.

Eine weitere sehr vorteilhafte Ausgestaltung der Erfindung liegt auch darin, daß das Material zum Brechen mit Hand bei Raumtemperatur und darunter vorgesehen ist, wobei die Brechbarkeit durch das Verhältnis von Füllstoffen zu Schäumung bzw. Schäumungsgrad definiert werden kann.

Dadurch ist das Material sehr flexibel einsetzbar. Die Abstimmung der geschäumten und der gefüllten Lagen aufeinander definiert die Brechbarkeit. Dabei können auch in der geschäumten Lage Füllstoffe vorgesehen werden.

Erfindungsgemäß ist es auch sehr vorteilhaft, wenn wenigstens eine Außenlage angestanzt oder angeritzt ist, wobei die Anstanzung bzw. die Anritzung eine Tiefe von 0,03 bis 0,1 mm aufweisen kann.

Hiermit wird die Brechbarkeit erleichtert. Zudem wird vorgegeben, in welchen Bereichen und in welcher Richtung ein Bruch verlaufen soll.

Eine weitere sehr vorteilhafte Ausgestaltung der Erfindung liegt auch darin, daß wenigstens eine Barriereschicht vorgesehen ist.

Durch den Einsatz einer Barriereschicht wird auch die Verwendung des Materials für empfindliche Füllgüter möglich. Zudem kann die Lagerfähigkeit des Füllgutes erhöht werden.

Sehr vorteilhaft ist es gemäß einer weiteren Ausgestaltung der Erfindung auch, wenn das Material als Folienbahn oder Abschnitt ausgebildet ist.

Durch die Bereitstellung des Materials als Folienbahn oder auch als Abschnitt ist eine sehr vielseitige Weiterverarbeitung möglich.

Eine sehr vorteilhafte Weiterbildung der Erfindung liegt auch dann vor, wenn das Material eine Dicke zwischen 0,6 und 1,5 mm aufweist und/oder die Dichte des Materials zwischen 0,6 und 1,2 g/cm³, vornehmlich zwischen 0,95 und 1,05 g/cm³ beträgt.

Hierdurch ist das Material vielseitig, insbesondere für Lebensmittelverpackungen einsetzbar. Die Dichte der gefüllten Lagen kann im Bereich von 1,35 g/cm³ liegen.

Äußerst vorteilhaft ist es erfindungsgemäß auch, wenn die Verpackung aus einer Bahn oder einem Bogen des Verpackungsmaterials unter Kontrolle der Verfahrensparameter tiefpezogen wird.

Hierdurch lässt sich auf einfache Art und Weise eine Verpackung formen. Durch die Kontrolle der Verfahrensparameter wird verhindert, daß sich die Eigenschaften des Materials unerwünscht verändern.

Dabei ist es sehr vorteilhaft, wenn für die Tiefziehvorrichtung eine angepasste Kontur mit Hinterschneidungen des Tiefziehstempels vorgesehen wird.

Damit werden besonders gute Tiefziehergebnisse erreicht. Solche speziellen Tiefziehstempel sind unter dem Schlagwort Innoform bekannt.

Eine sehr vorteilhafte Verpackung hergestellt aus einem erfindungsgemäßen Verpackungsmaterial, liegt vor, wenn eine Multipack-Verpackung vorgesehen ist, wobei die einzelnen Verpackungen voneinander abgebrochen werden können.

Hierfür kann des erfindungsgemäße Material sehr gut eingesetzt werden. Andere Verpackungen sind denkbar. Es ist beispielsweise denkbar, daß auch zum Öffnen einer Verpackung ein Stück oder dergleichen abgebrochen werden kann.

Sehr vorteilhaft ist es in diesem Zusammenhang erfindungsgemäß auch, wenn die Verpackung mit einem Label, einem Sleeve oder einer Bedruckung versehen ist.

Hiermit lassen sich auf einfache Art und Weise Informationen, Hinweise, aber auch Werbung oder dergleichen auf der Verpackung anbringen.

Äußerst vorteilhaft ist es erfindungsgemäß auch, wenn die Verpackung für den Form-Fill-Seal - Standardprozess vorgesehen ist.

Damit lassen sich Verpackungen formen, die sofort befüllt und dann direkt verschlossen werden. Dies ist gerade aus hygienischen Gesichtspunkten, aber auch im Hinblick auf Transportmöglichkeiten und Lagerhaltung vor der Befüllung sehr vorteilhaft.

Im folgenden wird die Erfindung anhand mehrerer Ausfuhrungsbeispiele näher veranschaulicht.

Dabei zeigen:
- Fig. 1: einen schematischen Schichtaufbau eines dreischichtigen Materials,
- Fig. 2: einen schematischen Schichtaufbau eines fünfschichtigen Materials, und
- Fig. 3: einen schematischen Schichtaufbau eines siebenschichtigen Materials.

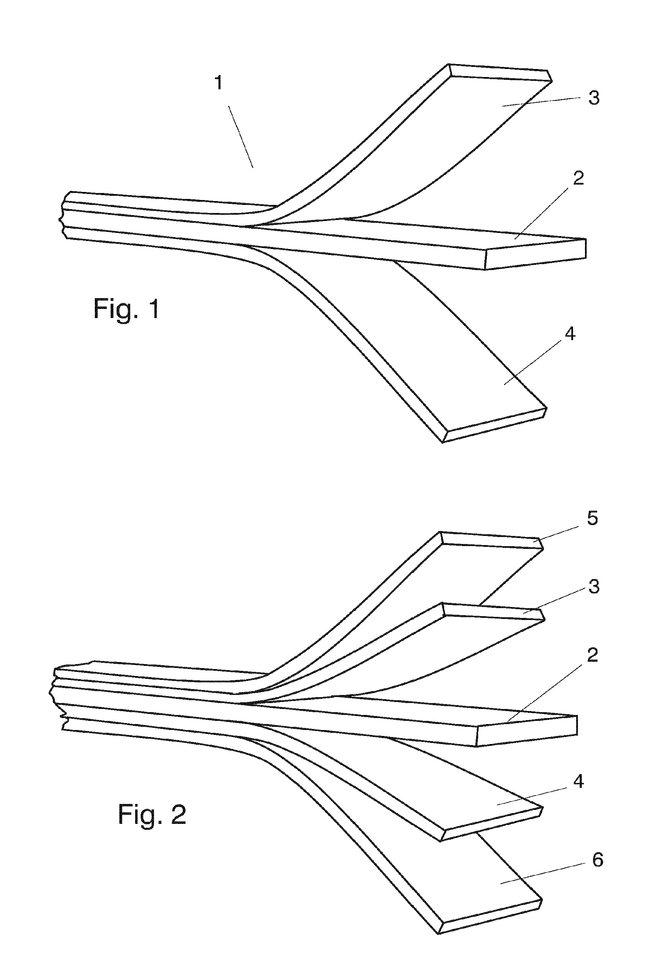

Mit 1 ist in Fig. 1 ein mehrschichtiger Materialaufbau mit einer inneren Materiallage 2 und zwei jeweils auf einer Seite der inneren Materiallage 2 angeordneten äußeren Schichten 3 und 4 bezeichnet.

Die innere Materiallage 2 ist aus einem geschäumten Polypropylen gefertigt. Es ist dabei denkbar, daß Bio-PP, aber auch Blends, Copolymere oder dergleichen eingesetzt werden, die jedoch in der Regel Polypropylen oder Bio-PP wenigstens zu einem Großteil enthalten. Denkbar ist auch der Einsatz anderer schäumbarer Kunststoffe.

Die Dichte des geschäumten Materials beträgt dabei zwischen 0,50 und 0,90, insbesondere zwischen 0,65 und 0,90 g/cm³. Die Schäumung kann auf physikalischem oder chemischen Weg erfolgen. Bei einer physikalischen Schäumung bietet sich der Einsatz von Stickstoff, Kohlenstoffdioxyd, Wasserdampf oder anderen Standard-Gasen an. Durch diese wird umweltverträglich eine sehr gute Schäumung erzielt. Der Zusatz von Füllstoffen, insbesonder zur Verbesserung der Schäumung ist denkbar. Wenigstens eine der beiden äußeren Schichten 3 und 4 ist mit einem Füllstoff versehen. Dieser Füllstoff kann mineralische Füllstoffe, aber auch Regrinds oder dergleichen enthalten. An mineralischen Füllstoffen sind CaCO3, Talk oder dergleichen denkbar. Die Dichte der gefüllten Schichten 3 und 4 kann dabei bis zu 1,35 g/cm³ betragen.

In diesem Zusammenhang ist es denkbar, daß beide Außenlagen 3 und 4 jeweils mit Füllstoff versehen sind.

Die geschäumte Lage 2 und die beiden Außenlagen 3 und 4 wirken so zusammen, daß sich ein bei Raumtemperatur brechbares Material ergibt, wie dies beispielsweise von Multipack-Verpackungen aus PS bekannt ist, bei denen einzelne Packungen durch Abbrechen abgetrennt werden können. Die Brechbarkeit wird durch das Zusammenspiel der gefüllten Lagen 3 und 4 und der geschäumten Lage 2 definiert.

Es ist gemäß einem weiteren Ausfühnmgsbeispiel der Erfindung auch denkbar, daß auf der Außenseite der Außenlagen 3 und 4 jeweils ein Skinlayer 5 und 6 vorgesehen ist.

Gerade auf der Innenseite der fertigen Verpackung kann dies sinnvoll sein, um unerwünschte Effekte der gefüllten Lage auf das Füllgut zu verhindern. Es ist auch denkbar, daß durch diese Skinlayer auch Barriereeigenschaften hinzugefügt oder glatte Oberflächen erzeugt werden. Die Dicke eines Skinlayers 5 bzw. 6 beträgt in der Regel zwei bis zehn Prozent, vorzugsweise zwei bis fünf Prozent der Gesamtdicke des Materials.

Besonders glatte Oberflächen lassen sich sehr gut bedrucken, so daß ein gleichmäßiges und qualitativ hochwertiges Druckbild aufgebracht werden kann.

Um die Brechung zu erleichtern und/oder um den Bruch zu leiten, kann die Oberfläche des Materials 1 leicht angestanzt oder angeritzt sein.

Die Anstanzung bzw. die Anritzung kann dabei eine maximale Tiefe zwischen 0,03 und 0,1mm aufweisen.

Es hat sich als ausreichend erwiesen, wenn mit solch geringen Anstanz- bzw. Anritztiefen gearbeitet wird. Trotzdem wird der Bruch deutlich erleichtert und sicher geleitet.

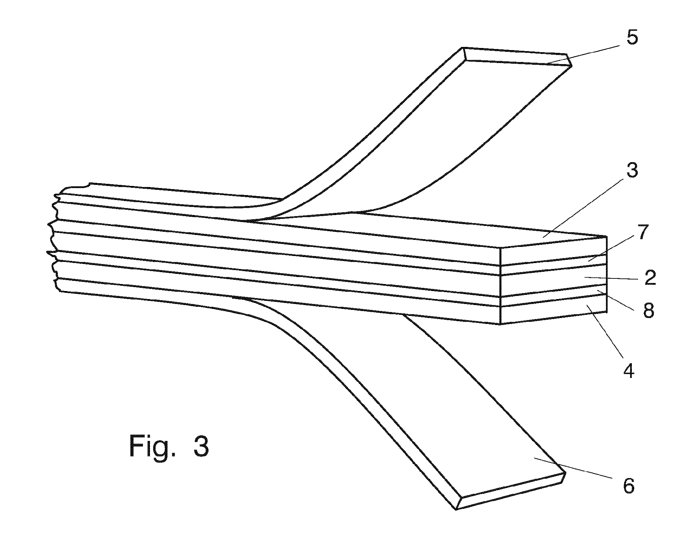

Gemäß einer weiteren Ausgestaltung der Erfindung, die in Fig. 3 dargestellt ist, können beispielsweise zwischen der Innenlage 2 und den beiden Außenlagen 3 und 4 Haftvermittler-, Barriere- oder andere funktionelle Schichten vorgesehen sein, die hier mit den Ziffern 7 und 8 bezeichnet sind.

Das gesamte Material weist in der Regel eine Dicke zwischen 0,6 und 1,5mm auf.

Die Dichte beträgt zwischen 0,6 und 1,2 g/cm³, vorzugsweise zwischen 0,95 und 1,05 g/cm³.

Für die Weiterverabeitung kann das Material als Folienbahn oder als Bahnabschnitt, d.h. als Sheet zur Verfügung gestellt werden.

Um aus dem Material eine Verpackung zu bilden, wird das Material tiefgezogen.

Dabei müssen die Tiefziehparameter in den üblichen Grenzen kontrolliert und eingehalten werden.

Die Verwendung einer Tiefziehvorrichtung mit einer angepassten Kontur mit Hinterschneidungen des Tiefziehstempels, dies ist auch unter dem Schlagwort Innoform bekannt, ist besonders vorteilhaft, da dadurch die Materialdicke in der tiefgezogenen Verpackung weitestgehend konstant gehalten wird.

Die so hergestellten Verpackungen, insbesondere Multipack-Verpackungen können auf der Außenseite mit Bedruckungen, Labels aber auch Sleeves versehen sein.

Die einzelnen Verpackungen des Multipacks lassen sich bei Bedarf durch einfaches Abbrechen vom Multipack abtrennen.

Das erfindungsgemäße Verpackungsmaterial ist in allen seinen Varianten besonders für den Form-Fill-Seal Prozess geeignet.

Dieser Prozess wird aufgrund geringem Lageraufwand und nur geringen Problemen bei der Hygiene oftmals für Lebensmittelprodukte, insbesondere Yoghurt oder dergleichen eingesetzt.

Gerade dort sind auch Multipacks gebräuchlich, die dann beim Endkunden je nach Bedarf getrennt werden.

Andere Einsatzmöglichkeiten sind denkbar.

Es ist weiterhin denkbar, daß das erfindungsgemäße Verpackungsmaterial auch variiert werden kann. Es sind weitere zusätzliche Schichten denkbar. Ebenso ist es denkbar, daß nur eine Haftvermittler oder Zwischenschicht 7 und 8 vorgesehen ist. Ebenso denkbar ist es, daß nur ein Skinlayer 5 und 6 vorgesehen ist.

Als Mindestanforderung an das erfindungsgemäße Verpackungsmaterial ist die geschäumte Lage 2 und eine mit Füllstoffen versehene Lage 3 oder 4 anzusehen.

## Patentansprüche

1. Verpackungsmaterial zur Herstellung von tiefgezogenen Kunststoff-Verpackungen, insbesondere von Multipack-Verpackungen, **dadurch gekennzeichnet, daß** das Material brechbar ausgebildet ist.

2. Verpackungsmaterial nach Anspruch 1, **dadurch gekennzeichnet, daß** das Material wenigstens großteils auf Polypropylen, Bio-PP oder PP bzw. Bio-PP enthaltenden Kunststoffen basiert.

3. Verpackungsmaterial nach Anspruch 1 oder 2, **dadurch gekennzeichnet, daß** das Material mehrlagig, vorzugsweise mindestens dreilagig, ausgebildet ist, wobei wenigstens eine Schicht aus dem erfindungsgemäßen, brechbaren Material besteht.

4. Verpackungsmaterial nach einem der vorangehenden Ansprüche, **dadurch gekennzeichnet, daß** wenigstens einer Materiallage Füllstoffe, insbesondere mineralische Füllstoffe zugesetzt sind.

5. Verpackungmaterial nach einem der vorangehenden Ansprüche, **dadurch gekennzeichnet, daß** wenigstens eine Materiallage geschäumt ausgeführt ist, wobei die geschäumte Materiallage mit Stickstoff, Kohlenstoffdioxyd, Wasserdampf oder anderen Standard-Gasen physikalisch und/oder wobei die geschäumte Materiallage chemisch geschäumt worden sein kann.

6. Verpackungsmaterial nach Anspruch 5, **dadurch gekennzeichnet, daß** die Dichte des geschäumten Materials zwischen 0,50 und 0,90, insbesondere zwischen 0,65 und 0,90 g/cm³ beträgt.

7. Verpackungsmaterial nach einem der Ansprüche 5 oder 6, **dadurch gekennzeichnet, daß** die geschäumte Lage als Innenlage des Verpackungsmaterials vorgesehen ist und/oder daß wenigstens eine Außenlage mit Füllstoffen versehen ist, vorzugsweise ist beidseitig der Mittellage mindestens jeweils eine Lage mit Füllstoffen versehen.

8. Verpackungsmaterial nach einem der vorangehenden Ansprüche, **dadurch gekennzeichnet, daß** wenigstens eine Materiallage einen Anteil eines Regrinds des Verpackungsmaterials enthält, wobei dieses vorzugsweise in der gefüllten Materiallage oder einer Zwischenlage vorgesehen ist.

9. Verpackungsmaterial nach einem der vorangehenden Ansprüche, **dadurch gekennzeichnet, daß** auf wenigstens einer gefüllten Lage eine Decklage als Skinlayer vorgesehen ist, wobei jeder Skinlayer eine Dicke von 2 bis 10%, vorzusgsweise 2 bis 5% der Dicke des Gesamtmaterials aufweisen kann.

10. Verpackungsmaterial nach einem der vorangehenden Ansprüche, **dadurch gekennzeichnet, daß** das Material zum Brechen mit Hand bei Raumtemperatur und darunter vorgesehen ist, wobei die Brechbarkeit durch das Verhältnis von Füllstoffen zu Schäumung bzw. Schäumungsgrad definiert werden kann.

11. Verpackungsmaterial nach einem der vorangehenden Ansprüche, **dadurch gekennzeichnet, daß** wenigstens eine Außenlage angestanzt oder angeritzt ist, wobei die Anstanzung bzw. die Anritzung eine Tiefe von 0,03 bis 0,1 mm aufweisen kann.

12. Verpackungsmaterial nach einem der vorangehenden Ansprüche, **dadurch gekennzeichnet, daß** wenigstens eine Barriereschicht vorgesehen ist.

13. Verpackungsmaterial nach einem der vorangehenden Ansprüche, **dadurch gekennzeichnet, daß** das Material als Folienbahn oder Abschnitt ausgebildet ist.

14. Verpackungsmaterial nach einem der vorangehenden Ansprüche, **dadurch gekennzeichnet, daß** das Material eine Dicke zwischen 0,6 und 1,5 mm aufweist und/oder die Dichte des Materials zwischen 0,6 und 1,2 g/cm³, vornehmlich zwischen 0,95 und 1,05 g/cm³ beträgt.

15. Verfahren zum Herstellen einer Verpackung aus einem erfindungsgemäßen Verpackungsmaterial, **dadurch gekennzeichnet, daß** die Verpackung aus einer Bahn oder einem Bogen des Verpackungsmaterials unter Kontrolle der Verfahrensparameter tiefgezogen wird, wobei für die Tiefziehvorrichtung eine angepasste Kontur mit Hinterschneidungen des Tiefziehstempels vorgesehen werden kann.

16. Verpackung hergestellt aus einem erfindungsgemäßen Verpackungsmaterial, **dadurch gekennzeichnet, daß** eine Multipack-Verpackung vorgesehen ist, wobei die einzelnen Verpackungen voneinander abgebrochen werden können, wobei die Verpackung mit einem Label, einem Sleeve oder einer Bedruckung versehen sein kann und/oder wobei die Verpackung für den Form-Fill-Seal - Standardprozess vorgesehen sein kann.
